Europäisches Patentamt

European Patent Office

Office européen des brevets

(19)

(11) Publication number: **0 126 400**
**A2**

(12) **EUROPEAN PATENT APPLICATION**

(21) Application number: **84105447.1**

(22) Date of filing: **14.05.84**

(51) Int. Cl.³: **B 60 J 1/17**

(30) Priority: **23.05.83 IT 5335983 U**

(43) Date of publication of application: **28.11.84**
**Bulletin 84/48**

(84) Designated Contracting States: **DE FR GB SE**

(71) Applicant: **FIAT AUTO S.p.A., Corso Giovanni Agnelli 200, I-10135 Torino (IT)**

(72) Inventor: **Trebbi, Giorgio, Via Verdina 8, I-10025 Pino Torinese (Torino) (IT)**
Inventor: **Di Giusto, Nevio, Via Guarini 48, I-10078 Venaria (Torino) (IT)**

(74) Representative: **Jacobacci, Filippo et al, c/o JACOBACCI-CASETTA & PERANI S.n.c. Via Alfieri, 17, I-10121 Torino (IT)**

(54) Vertically movable window glass for side windows in motor vehicle bodies, and associated support and guide structure.

(57) A vertically movable window glass (5) for a vehicle side window has front and rear edges which are offset towards the inside of the window opening and engage in a channel section weather strip (8) carried by support structure (9), the offset part (10) of the window glass sliding in said strip (8). The offset of the said part is such that the remaining external surface of the glass (5) lies substantially flush with the external surface of adjacent parts (7) of the vehicle body.

EP 0 126 400 A2

Vertically movable window glass for side windows in motor vehicle bodies, and associated support and guide structure

The present invention relates to a vertically movable window glass for side windows in motor vehicle bodies, and structure for supporting and guiding the same, of the type which allows the external surface of the window glass to be flush with the external surface of the motor vehicle body.

It is known according to the prior art to provide channel section weather strips in which the front and rear edges of the window glass of a motor vehicle are engaged directly and guided so that the external surface of the glass is necessarily displaced towards the inside of the vehicle body with respect to the external surface of the adjacent part of the vehicle body at the lateral and upper edges of the window.

The object of the present invention is to provide a movable window glass, and associated support and guide structure of the type described above, in which the external surface of the window glass is substantially flush with the external surface of the adjacent parts of the vehicle body at the edges of the window.

With the aforesaid object in view the present invention provides a vertically movable window glass for side windows in motor vehicle bodies, and associated support and guide structure, in which the front and rear edges of the window glass engage slidably in a guide of known type carried by the support structure, characterised in that the front and rear edges of the window glass are offset towards the inside of the window opening by an amount such that the remaining external surface of the glass lies substantially flush with the external surface of the vehicle body adjacent the window opening.

The invention will be further described, by way of non-limiting example, with reference to the accompanying drawings, in which:

Figure 1 is a perspective view of a motor vehicle door provided with a window glass having a support and guide structure according to the invention;

Figures 2 to 4 are sections, on an enlarged scale, taken on line II-II in Figure 1, showing three different embodiments of window glass and associated support and guide structures in accordance with the invention.

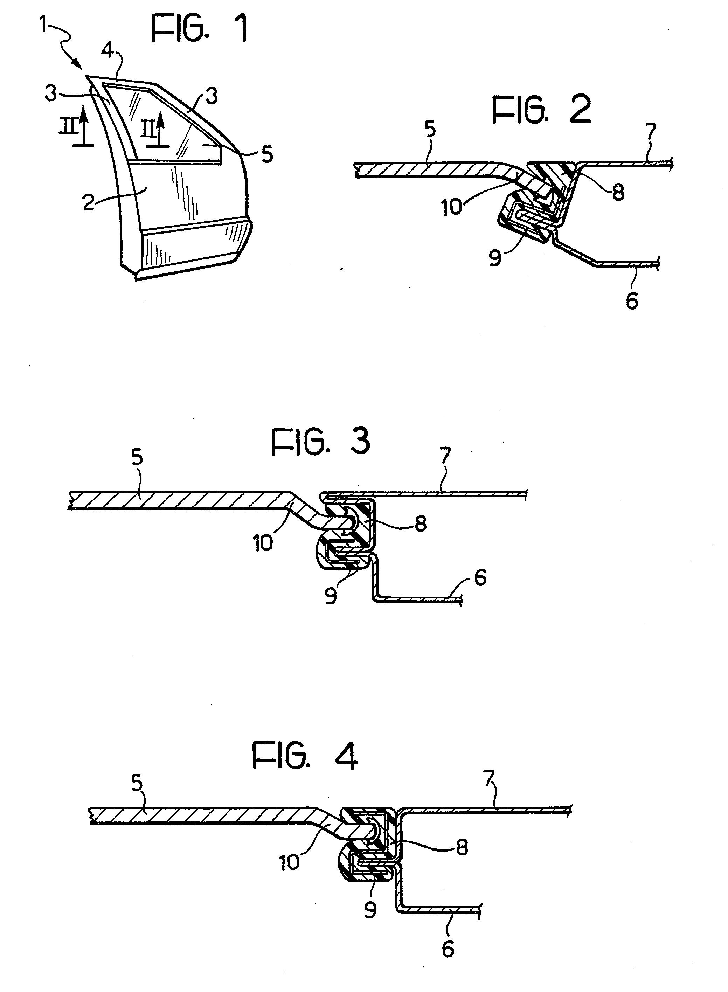

Referring to Figure 1, a motor vehicle door is indicated generally by reference numeral 1 and comprises a door panel 2 surmounted by two window frame uprights 3 which are inter-connected at their upper ends by a transverse window frame member 4.

The upper edge of the door panel 2, the uprights 3, and the transverse member 4 define a window in the door 1. This window is provided with a window glass or pane 5 which is movable with respect to the structure of the door 1 between a raised position, shown in Figure 1, and a lowered position (not shown).

The structure of the door includes an internal framework 6 and an external panel member 7, this structure also including the window frame uprights 3 and the transverse member 4.

A channel-section weather strip 8 of resilient material, facing inwardly of the window opening, is fixed to an edge flange 9 formed at the junction of the framework 6 and the panel member 7.

The edges 10 of the window glass 5, that is, the front edge (not shown) and the rear edge, are offset towards the interior of the window opening, the offset edges being slidably located in the channel section weather strip 8, which acts as a guide. The offset of the edges 10 is such that the remaining external surface of the window glass 5 lies substantially flush with the external surface of the outer panel member 7 immediately adjacent the front and rear edges of the window, as shown in Figures 2-4.

The inclination of the flange 9 to the plane of the outer door panel 7 determines the inclination of the associated weather strip 8 with respect to the surface of the window glass 5.

The offset edges of the window glass 5 may be formed simply by a curved edge portion 10 as shown in Figure 2, or alternatively may be formed by an edge portion of elongate "S" configuration, as shown in Figures 3 and 4, so that an edge margin of the window glass is substantially parallel to but offset from the remaining surface of the window glass 5.

The weather strip 8 may partly overlap the external surface of the outer panel member 7, in order to provide better sealing.

0126400

- 4 -

It will be understood that while adhering to the principle of the present invention details of construction and embodiments may be varied widely with respect to what has been described and illustrated by way of example, without departing from the scope of the present invention.

CLAIMS:

1. A vertically movable window glass (5) for a side window of a motor vehicle body, and an associated support and guide structure, in which the front and rear edges of the window glass (5) engages slidably in a guide (8) of known type carried by the support structure, characterised in that the front and rear edges (10) of the window glass (5) are offset towards the inside of the window opening by an amount such that the remaining external surface of the glass (5) lies substantially flush with the external surface (7) of the vehicle body adjacent the window opening.

2. Movable window glass according to Claim 1, in which the front and rear edge portions (10) of the window glass (5) have a substantially "S" shaped cross section.

3. Movable window glass according to Claim 1, in which the front and rear edge portions (10) of the window glass (5) are inclined at an angle to the remaining part of the window glass.

FIG. 1

FIG. 2

FIG. 3

FIG. 4

0126400

1/1